# EUROPEAN PATENT SPECIFICATION

(11) **EP 4 296 662 B1**
(45) Date of publication and mention of the grant of the patent: **29.10.2025**
(21) Application number: 23180087.1
(22) Date of filing: 19.06.2023
(51) Int. Cl.: G01N 29/04, G01N 29/06, G01N 29/32, G01N 29/40, G01N 29/44, G06T 7/00

(54) **ULTRASONIC FLAW-DETECTION SYSTEM AND ULTRASONIC FLAW-DETECTION METHOD**
ULTRASCHALLFEHLERDETEKTIONSSYSTEM UND ULTRASCHALLFEHLERDETEKTIONSVERFAHREN
SYSTÈME ULTRASONORE DE DÉTECTION DE DÉFAUT ET PROCÉDÉ ULTRASONORE DE DÉTECTION DE DÉFAUT

(30) Priority: 20.06.2022 KR 20220075107
(43) Date of publication of application: 27.12.2023
(73) Proprietor: Doosan Enerbility Co., Ltd., Seongsan-gu Changwon-si, Gyeongsangnam-do 51711 (KR)
(72) Inventor: Seo, June Sung, Gimpo-si, Gyeonggi-do (KR); Yoo, Jun Woo, Seoul (KR); Lee, Jung Min, Seoul (KR)
(74) Representative: BCKIP Part mbB

(56) References cited:
- JP-A- 2007 298 386
- US-A1- 2018 315 180
- US-A1- 2020 096 454
- US-A1- 2022 018 811

## Description

### FIELD

The present invention relates to an ultrasonic flaw-detection system and an ultrasonic flaw-detection method.

### BACKGROUND

Recently, the application of high-tech new materials in the field of wind power generation system has gained popularity as a promising industry in new renewable energy fields. This composite material industry has a wide range of applications and exerts a significant influence on other fields of industry through leading technical innovations. Also, acquiring technical superiority in the composite material industry can be quite challenging.

In particular, the weight of a rotating blade itself is a key factor that significantly determines the efficiency of costly power generation facilities. Therefore, the industry has shifted from predominantly employing glass fiber composites in the past to manufacturing wind turbine blades using carbon fiber composites. The carbon fiber composite is expensive from a price standpoint due to the trend of larger size but can be about 40 % lighter in weight than the glass fiber.

The lightweight nature of the carbon fiber composites can serve as a critical stepping stone that enables the realization of larger a generator capacity. As a result, the overall market for a wind turbine blade is expected to increase four to five times over the next ten years.

Meanwhile, a composite material blade may exhibit various internal damages such as debonding, delamination, and cracks, etc., due to complexities associated with materials and manufacturing methods. These damages are often challenging to detect visually.

These defects initially may be in a small size that does not affect structurally. However, as a crack propagates/progresses while being subjected to repeated load and impact load, the crack may become large enough to affect the structural safety of the blade over time, and thus, eventually, a big accident may occur. Therefore, if detection is carried out at an early fault stage and repair is made according to instructions, it is possible to prevent major accidents in advance and to reduce economic damage caused such accidents.

An ultrasonic flaw-detection method in which a detection target is scanned by using an ultrasonic wave and an inspector determines whether or not there is a defect in the detection target based on the obtained scan data is being mainly used as a blade structural safety detection method. In such a detection method, detection results may vary depending on inspector's skillfulness and subjective opinions, so that it is difficult to obtain the continuity and objectivity of the detection result.

US 2020 / 0 018 811 A1 discloses a method for detecting flaws in a composite structure using ultrasonic images, wherein the images are analyzed using a machine learning algorithm to determine a defect in the structure. A similar method is described in US 2020 / 0 096 454 A1.

US 2018 / 0 315 180 A1 discloses a computer-implemented method of automatically locating a portion of interest in image or matrix data derived from an item under consideration. This method includes: identifying parts of the image or matrix data that satisfy a preset threshold as objects which are possibly parts of the portion of the interest; applying at least one preselected filter to the data corresponding to the objects to find a set of objects consisting of the objects most likely to be part of the portion of interest; sorting the objects of the set into clusters according to a predefined criterion; and using a known characteristic of the portion of interest to identify which one of the clusters corresponds to the portion of interest.

Further, JP 2007 298386 A discloses an ultrasonic flaw detection data processing device including a shape data storage part for an ultrasonic flaw detection object, a flaw candidate domain extraction part for extracting a domain wherein an ultrasonic flaw detection echo satisfies a prescribed standard, a shape candidate domain extraction part for extracting a domain overlapped with a shape gate domain from among flaw candidate domains, a generation part of a shape candidate domain to be divided for performing dividing processing of the shape candidate domain by using a part having the minimal echo height as a boundary, a characteristic position setting part for setting a characteristic position in the shape candidate domain to be divided, and a shape echo determination part for determining that the shape candidate domain to be divided is a shape echo when the characteristic position is included in a set domain of shape data. The dividing processing includes A-scope separation processing for dividing the shape candidate domain in the path length direction of a beam for ultrasonic flaw detection, and a focal row direction separation processing for re-dividing the shape candidate domain in the vertical direction to the path length direction in B-scope after the A-scope separation processing.

### SUMMARY

In order to overcome the above-mentioned problems, there is a requirement for a detection method for minimizing a detection error by obtaining the objectivity of a result of an ultrasonic flaw-detection and by preventing human errors.

The purpose of the present invention is to provide an ultrasonic flaw-detection system capable of training artificial intelligence by using data determined to be defective by experienced inspectors and of objectively determining defects of a detection target by using the trained artificial intelligence.

The technical problem to be overcome by the present invention is not limited to the above-mentioned technical problems. Other technical problems not mentioned can be clearly understood from the embodiments of the present invention by a person having ordinary skill in the art.

To this end, the present invention provides a flaw-detection system in accordance with claim 1 and an ultrasonic flaw-detection method in accordance with claim 6.

According to a first aspect of the invention, an ultrasonic flaw-detection system includes: an ultrasonic flaw-detection device configured to transmit an ultrasonic wave to a detection target, collect an ultrasonic echo signal reflected from the detection target, and then generate a signal data; a signal data preprocessor configured to preprocesses the signal data; a defect candidate group selection unit configured to select a defect candidate group based on the preprocessed signal data and generate defect candidate signal data based on the selection; an image data generator configured to generate image data based on the defect candidate signal data included in the defect candidate group; and a defect determination unit configured to determine whether there is a defect in the defect candidate group based on the image data.

The signal data preprocessor removes noise from the signal data, extracts poles from the signal data, and divides the signal data into a plurality of clusters having a certain size based on the pole.

The defect candidate group selection unit determines whether a defect is included in the signal data belonging to each cluster based on a deep learning algorithm that uses each of the plurality of clusters as an input, and selects the cluster determined to include a defect as the defect candidate group.

The deep learning algorithm may be a variational auto encoder (VAE) or a residual neural network (ResNet).

The image data generator may generate a B-Scan image data and a C-Scan image data on the detection target, based on the signal data.

The image data generator may generate the B-Scan image data and the C-Scan image data on an area in which the defect candidate group is included in the detection target, based on the signal data included in the defect candidate group.

The defect determination unit determines whether the defect candidate group has a defect based on a deep learning algorithm using the image data as an input.

The deep learning algorithm may be a you only look once (YOLO) algorithm or a Faster R-CNN algorithm.

The defect determination unit may output whether there is a defect for each of the defect candidate groups and may output, when there is a defect, a bounding box that surrounds the corresponding defect.

According to a second aspect of the invention, an ultrasonic flaw-detection method is provided that may be carried out using the ultrasonic flaw-detection system of the first aspect of the invention. The ultrasonic flaw-detection method includes: transmitting an ultrasonic wave to a detection target, collecting an ultrasonic echo wave reflected from the detection target, and then generating a signal data; preprocessing the signal data; selecting a defect candidate group based on the preprocessed signal data and generate defect candidate signal data based on the selection; generating image data based on the defect candidate signal data included in the defect candidate group; and determining whether there is a defect in the defect candidate group based on the image data.

### BRIEF DESCRIPTION OF THE DRAWINGS

FIG. 1 is a view showing an ultrasonic flaw-detection system according to various embodiments of the present invention;
FIG. 2 is a view showing an example of a flaw-detection method of an ultrasonic flaw-detection device 10;
FIG. 3 is a view showing a simplest structure of ResNet;
FIGS. 4A and 4B are views showing an example of an image data generated by an image data generator;
FIG. 5 is a view showing a structure of a Faster R-CNN according to the embodiment of the present invention;
FIG. 6 is a flowchart showing an ultrasonic flaw-detection method using the ultrasonic flaw-detection system according to various embodiments of the present invention.

### DETAILED DESCRIPTION

The features, advantages and method for accomplishing the present invention will be more apparent from referring to the following detailed embodiments described as well as the accompanying drawings. However, the present invention is not limited to the embodiment to be disclosed below and may be implemented in various different forms. While the embodiments bring about the complete disclosure of the present invention and are provided to make those skilled in the art fully understand the scope of the present invention, the present invention is defined by the scope of the appended claims. The same reference numerals throughout the invention correspond to the same elements.

When one component is referred to as being "connected to" or "coupled to" another component, the one component may be directly connected or coupled to the another component. However, the one component may be indirectly connected to the another component and there may be an intervening component interposed between and connecting them. Meanwhile, what one component is referred to as being "directly connected to" or "directly coupled to" another component indicates that another component is not interposed between them. The term "and/or" includes each of the mentioned items and any combination of the mentioned items thereof.

Terms used in the present specification are provided for description of only specific embodiments of the present invention, and not intended to be limiting. In the present specification, an expression of a singular form includes the expression of plural form thereof unless specifically stated otherwise. In the present invention, the terms "comprises", "comprising", and the like may indicate the presence of features, steps, operations, elements, and/or components, but do not preclude addition of one or more other functions, steps, operations, elements, components, and/or combinations thereof.

While terms such as the first and the second, etc., can be used to describe various components, the components are not limited by the terms mentioned above. The terms are used only for distinguishing one component from the other.

Therefore, the first component to be described below may be the second component within the present invention. Unless differently defined, all terms used herein including technical and scientific terms have the same meaning as commonly understood by one of ordinary skill in the art to which the present invention belongs. In addition, terms defined in dictionaries generally used should be construed to have meanings matching contextual meanings in the related art.

A term "part" or "module" used in the embodiments may mean software components or hardware components such as a field programmable gate array (FPGA), an application specific integrated circuit (ASIC). The "part" or "module" may perform certain functions. However, the "part" or "module" is not meant to be limited to software or hardware. The "part" or "module" may be configured to be placed in an addressable storage medium or to restore one or more processors. Thus, for one example, the "part" or "module" may include components such as software components, object-oriented software components, class components, and task components, and may include processes, functions, attributes, procedures, subroutines, segments of a program code, drivers, firmware, microcode, circuits, data, databases, data structures, tables, arrays, and variables. Components and functions provided in the "part" or "module" may be combined with a smaller number of components and "parts" or "modules" or may be further divided into additional components and "parts" or "modules".

Methods or algorithm steps described relative to some embodiments of the present invention may be directly implemented by hardware and software modules that are executed by a processor or may be directly implemented by a combination thereof. The software module may be resident on a RAM, a flash memory, a ROM, an EPROM, an EEPROM, a resistor, a hard disk, a removable disk, a CD-ROM, or any other type of record medium known to those skilled in the art. An exemplary record medium is coupled to a processor and the processor can read information from the record medium and can record the information in a storage medium. In another way, the record medium may be integrally formed with the processor. The processor and the record medium may be resident within an application specific integrated circuit (ASIC).

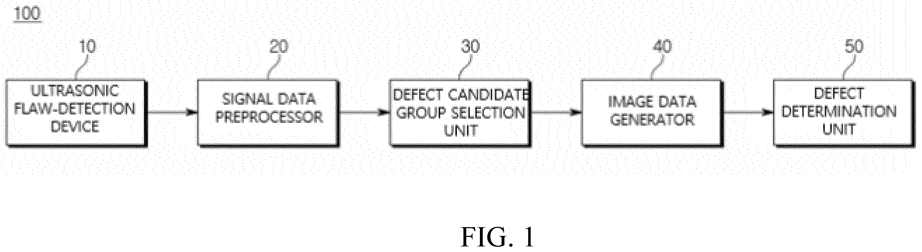

FIG. 1 is a view showing an ultrasonic flaw-detection system according to the present invention.

Referring to FIG. 1, the ultrasonic flaw-detection system 100 according to the present invention includes an ultrasonic flaw-detection device 10, a signal data preprocessor 20, a defect candidate group selection unit 30, an image data generator 40, and a defect determination unit 50.

The ultrasonic flaw-detection device 10 transmits an ultrasonic signal to a detection target through a probe, detects the returned ultrasonic signal, and then generates signal data. The returned ultrasonic signal may be referred to as an echo signal. The generated signal data is transmitted to the signal data preprocessor 20 and the image data generator 40.

According to an embodiment, the ultrasonic flaw-detection device 10 may use a longitudinal ultrasonic wave and may use a pulse reflection method in which ultrasonic pulses having a short duration are repeatedly generated and reflected pulse signals are analyzed.

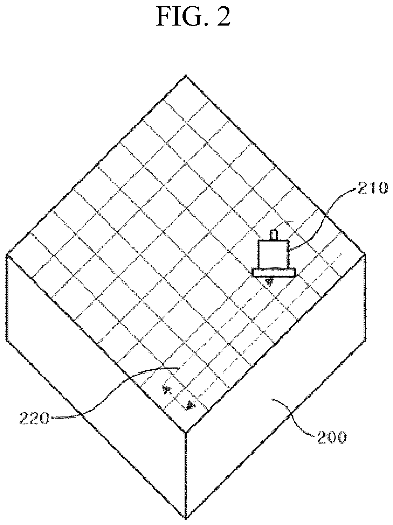

FIG. 2 is a view showing an example of a flaw-detection method of the ultrasonic flaw-detection device 10.

As shown in FIG. 2, the ultrasonic flaw-detection device 10 may scan the detection target 200 along a predetermined detection path 220 by using the probe 210. The ultrasonic flaw-detection device 10 transmits an ultrasound signal to the detection target 200. The ultrasonic flaw-detection device 10 may move along the predetermined detection path 220 to scan the detection target 200 along the predetermined detection path 220 or may transmit an ultrasound signal to positions along the predetermined detection path 220 while ultrasonic flaw-detection device 10 remains at a certain position or move within a limited range. The ultrasonic flaw-detection device 10 detects a signal reflected from the detection target 200. The reflected signal may be received by the probe 210 or by a separate receiver. The ultrasonic flaw-detection device 10 generates the signal data from the reflected signal.

Here, the signal data can also be referred to as A-Scan data. In the signal data, the magnitude of the ultrasonic signal reflected from the detection target can be represented by the amplitude of the ultrasonic signal. The amplitude of the ultrasonic signal may change over time. This can be represented through a graph displaying a signal waveform. the signal waveform may be displayed by a display of the ultrasonic flaw-detection system 100. In the graph, the X axis represents the progression of time and the Y-axis represents the magnitude of the amplitude of the reflected ultrasound signal.

According to the present invention, a deep learning algorithm is applied in order to determine the presence of a defect in the detection target. In order to apply deep learning algorithms, it is often necessary to process different data into constant input data. This processing is performed by the signal data preprocessor 20.

The signal data received from the ultrasonic flaw-detection device 10 may include noise data. The signal data preprocessor 20 first removes noise data from the signal data. According to the invention, in order to select a defect candidate group from the signal data, it signal poles are extracted from the signal data. Once the noise data is removed from the signal data, the signal poles can be more clearly and accurately extracted from the signal data. The signal data, from which the noise data is removed by the operation of the signal data preprocessor 200 may be referred to as noise-processed signal data. According to an embodiment, the signal data preprocessor 20 may remove noise data from the signal data by using Wavelet Denoising, which is one of Python libraries. The Wavelet Denoising can remove noise data present in the signal data through a process of decomposing the wavelet, calculating a universal threshold, and then reconstructing by using a threshold coefficient.

The signal data preprocessor 20 may detect peaks, each having an amplitude greater than a threshold value from the noise-processed signal data after the noise data is removed from the signal data. Then, the signal data preprocessor 20 may perform a pole extraction function that automatically extracts poles by controlling the minimum distance parameter between each of the detected peaks.

When a surface of the detection target is coated or an inner end portion of the detection target is bonded, those portions of the detection target may be detected or considered as discontinuous portions. Large signals may be reflected from those discontinuous portions. A pole may be formed in a discontinuous portion. In particular, the above-described discontinuous portion may have a higher peak than other poles. Then, in the signal data, a discontinuous portion by coating and discontinuous portion by bonding may be found in the signal data, and clustering is performed to generate data having the corresponding portion as start and end points. Then, one cluster may include information on the detection target in a thickness direction at one point. The clustering is performed such that a start point and an end point of a cluster are determined based on a discontinuous portion by coating and/or a discontinuous portion by bonding.

Finally, the signal data preprocessor 20 may adjust each cluster to have the same size. According to the embodiment, the number of data that each cluster has may be adjusted to be the same. According to an embodiment, the signal data preprocessor 20 may perform clustering or adjust clusters such that portions of the detection target represented by each of the clusters are in the same size.

The signal data preprocessor 20 transmits the preprocessed signal data to the defect candidate group selection unit 30. Signal data transmitted from the signal data preprocessor 20 to the defect candidate group selection unit 30 may be referred to as a preprocessed signal data.

The defect candidate group selection unit 30 selects a defect candidate group present in the detection target based on the signal data provided from the ultrasonic flaw-detection device 10. Here, the defect candidate group indicates a signal data or a location within the detection target, which is likely to have a defect. According to the invention, when the signal data is divided into a plurality of clusters by the above-described signal data preprocessor 20, the defect candidate group selection unit 30 determines whether a defect exists in each cluster, and the defect candidate group is a set of clusters in which defects may exist. According to an embodiment, the defect candidate selection unit 30 may determine whether or not each cluster from the plurality of clusters is likely to have a defect therein and generate a defect candidate group including clusters found likely to have a defect therein. Signal data representing, corresponding to or included in the defect candidate group may be referred to as defect candidate signal data.

According to the invention, the defect candidate group selection unit 30 selects or determines or generates the defect candidate group based on an artificial intelligence or deep learning algorithm by using the signal data preprocessed by the signal data preprocessor 20 as an input.

According to an embodiment, defect candidate group selection unit 30 may use, as an artificial intelligence algorithm, a variational auto encoder (VAE) or a residual neural network (ResNet) that is a multilayer neural network classification algorithm.

The VAE may be an unsupervised anomaly detection algorithm. The VAE may create a probability distribution by reducing the dimension of the input signal data, and perform an operation of generating data again by performing sampling through the created probability distribution. Since the VAE transmits data while learning a transfer function together, various and similar result values can be generated. Here, if a sliding window concept is applied, time series data analysis may be possible. Here, the size of the window may be the same as the size of one cluster described above, and may be designated as 500 according to an embodiment.

According to the embodiment, the VAE may perform learning based on unsupervised learning. The unsupervised learning may be a method of learning only with actual signal data without including a result value indicating whether the defect candidate group exists.

The ResNet may be a type of network in which the number of hidden nodes is further increased by adding convolutional layers based on a VGG-19 artificial intelligence algorithm. In ResNet, the neural network is further deepened, and a shortcut connection 310 between nodes is added.

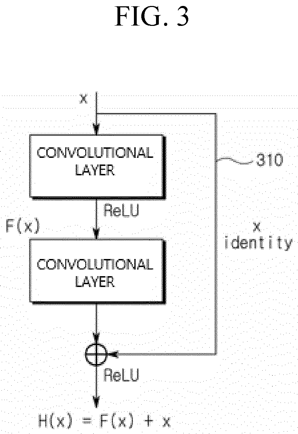

FIG. 3 is a view schematically showing an exemplary structure of the ResNet. The deeper ResNet can be implemented by continuously connecting the structure shown in FIG. 3 in series.

The structure of the ResNet can solve problems of existing artificial intelligence networks or deep learning networks such as vanishing gradient or overfitting. The greater the depth of the layer, the more learning efficiency increases. The ResNet may be named in the sense of learning a residual F(x) which is a difference between an output value H(x) and an input value x. The ResNet may intend to make the residual F(x) zero through learning.

The ResNet may be trained based on supervised learning, and the supervised learning may train a neural network while notifying learning data together with defect candidate group information included in the learning data.

Referring back to FIG. 1, the defect candidate group selection unit 30 may select or determine or generate a defect candidate group, which represents signal data expected to have a defect, from the preprocessed signal data received from the signal data preprocessor 20, and may transmit the selected defect candidate group to the image data generator 40. According to another embodiment, the defect candidate group selection unit 30 may transmit the signal data itself selected as having defects to the image data generator 40. According to an embodiment, the defect candidate group selection unit 530 may transmit signal data of the clusters included in the defect candidate group to the image data generator 40.

The image data generator 40 generates image data based on the signal data of the defect candidate group received from the defect candidate group selection unit 30. The generated image data may be a B-Scan image and/or a C-Scan image used in the ultrasonic flaw-detection. A method for generating such image data may adopt a method for generating B-Scan and/or C-Scan images. B-scan is a two-dimensional cross-sectional imaging technique that provides a vertical representation of a detection target. C-scan is a planar imaging technique that provides a two-dimensional representation of a surface in a certain depth of the detection target. According to an embodiment, the image data generator 40 may generate the image data for the entire detection target, however, according to an embodiment, it may be sufficient to generate image data only for portions corresponding to the defect candidate group received from the defect candidate group selection unit 30.

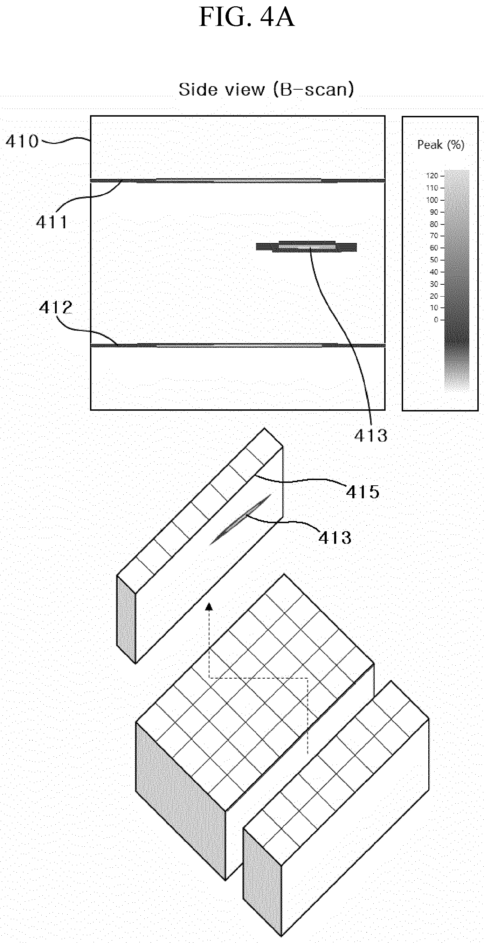

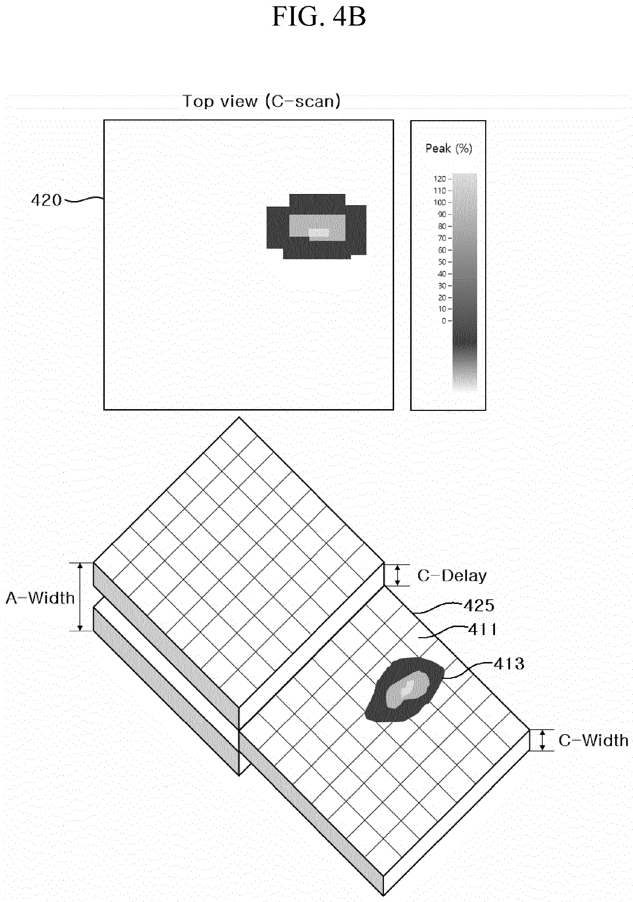

FIGS. 4A and 4B are views showing an example of the image data generated by an image data generator 40.

Referring to FIG. 4A, a B-Scan image 410 may be an image of one cross-section 415 viewed from the side of the detection target. Referring to the B-Scan image 410 shown in FIG. 4A, a large reflected wave or a significant reflected wave may be generated due to changes in a medium at a detection target surface 411 and a rear surface 412. In addition, another significant reflected wave can be generated in a region where an internal defect 413 exists. The location and/or depth of the internal defect 413 is detected by a time difference between a first reflected wave reflected from the detection target surface 411 and the reflected wave reflected from the internal defect 413. Then, the B-Scan image 410 can be generated by indicating the location of the detected defect.

Referring to FIG. 4B, a C-Scan image 420 may be an image of one cross-section 425 viewed from the top of the detection target. The one cross-section 425 may correspond to a certain depth of the detection target and may be referred to as a detection target surface. In the C-Scan image 420 shown in FIG. 4B, the location of an internal defect 423 is obtained based on the traveling time according to the detection path 220 shown in FIG. 2 and a difference between the arrival time of the reflected wave reflected from the detection target surface 411 and the arrival time of the reflected wave reflected from the internal defect 413. When the C-Scan image 420 is viewed from the top, it is possible to display the location of the defect indicated on a cross-section corresponding to a particular depth.

According to an embodiment, the ultrasonic flaw-detection system 100 may further include a display. The display may be configured to display the B-Scan image 410 and/or the S-Scan image 420 generated by the image data generator 40.

Referring back to FIG. 1, the images generated by the image data generator 40 are transmitted to the defect determination unit 50.

The defect determination unit 50 finally determines whether there is a defect in the defect candidate group of the detection target based on the images provided from the image data generator 40.

According to the invention, the defect determining unit 50 finally determines the defect based on an artificial intelligence or deep learning algorithm using the image data provided from the image data generating unit 40 as an input.

According to the embodiment, the defect determination unit 50 may use, as an artificial intelligence algorithm, a you only look once (YOLO) algorithm or a Faster R-CNN algorithm which is effective in distinguishing objects within an image.

The YOLO algorithm extracts features from one image and simultaneously creates a bounding box and divides classes, so that defects can be quickly determined.

The Faster R-CNN algorithm may be a two-stage object detection algorithm, comprising a first step and a second step. The first step is detecting an object by extracting features from an image, and the second step is calculating a defect probability of the detected object and box coordinates of the object, and finally of reading whether or not there is a defect.

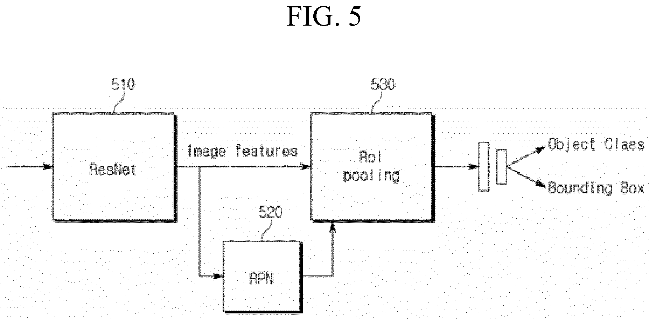

FIG. 5 is a view showing a structure of the Faster R-CNN according to the embodiment of the present invention.

According to the embodiment, in the first step of the Faster R-CNN, features are extracted and objects are detected based on the ResNet 510. The second step of the Faster R-CNN is performed with a region proposal network (RPN) 520 and a region of interest (RoI) pooling 530. Thereby, the defect determining unit 50, using the Faster R-CNN, may determine a probability that a calculated object candidate region belongs to a defect class or a background noise class. The defect determination unit 50 may determine the class of each object (whether it is a defect class or a background noise class) based on a threshold value, that is, reading the defect.

The defect determination unit 50 may output the bounding box as a result of the detection and reading process. The bounding box may be displayed on the images provided to the defect determination unit 50. The bounding box may indicate a defect portion on the lower surface.

The defect determination unit 50 may detect and read the defect based on the deep learning algorithm such as the Faster R-CNN. The effective learning may be required in order to improve the performance of such a deep learning algorithm. In order to train the deep learning algorithm employed by the defect determination unit 50, the defect determination unit 50 may perform data labeling (annotation) to include information on the defect portion in the image data. That is, the defect determination unit 50 employs a deep learning algorithm that utilizes supervised learning. This algorithm is trained using image data that has been reprocessed to include information about the location of the defect in the image data that includes the defect as an object. Through such learning, the performance of the deep learning algorithm employed by the defect determination unit 50 can be improved.

As described above, the ultrasonic flaw-detection system 100 proposed in the present invention is capable of determining whether the detection target has a defect or not. It achieves this by selecting a defect candidate group based on the signal data and subsequently determining the presence of a defect based on the image data obtained from the selected defect candidate group. Furthermore, the ultrasonic flaw-detection system 100 proposed in the present invention has the capability to enhance its performance by employing artificial intelligence for defect detection.

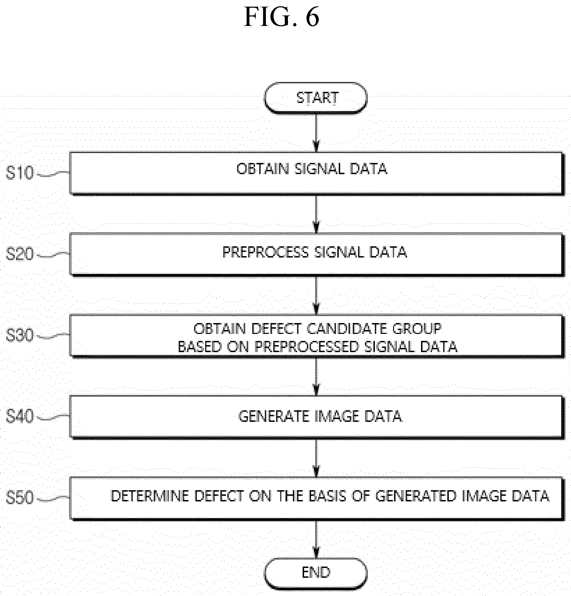

FIG. 6 is a flowchart showing an ultrasonic flaw-detection method using the ultrasonic flaw-detection system according to various the present invention.

Referring to FIG. 6, the ultrasonic flaw-detection method using the ultrasonic flaw-detection system according to various embodiments of the present invention includes a step S10 of collecting signal data, a step S20 of preprocessing the collected signal data, a step S30 of obtaining a defect candidate group based on the preprocessed signal data, a step S40 of generating image data based on the obtained defect candidate group, and a step S50 of determining a defect based on the image data.

In step S 10, the ultrasonic flaw-detection system 100 utilizes the ultrasonic flaw-detection device 10 to emit ultrasonic waves toward the detection target 200. It then detects and captures the signal reflected from the detection target 200. According to the embodiment, the ultrasonic flaw-detection device 10 may generate ultrasonic pulses having a short duration in a repeated manner. These pulses are emitted towards the detection target 200, and the ultrasonic flaw-detection device 10 may obtain the signal data by detecting the pulse signal reflected from the detection target 200.

In step S20, the ultrasonic flaw-detection system 100 preprocess the signal data obtained in step S10. The preprocessing operation includes removing noise included in the signal data, extracting poles from the signal data with noise removed, and dividing the signal data into a plurality of clusters based on the extracted poles. Here, the plurality of clusters may be adjusted to have the same size so that each of clusters having the same size become input data to be input to the deep learning algorithm in the next step.

In step S30, the ultrasonic flaw-detection system 100 obtains a defect candidate group based on the preprocessed signal data. According to the invention, the ultrasonic flaw-detection system 100 determine whether a defect is likely to exist in each of the plurality of clusters generated in step S20. The ultrasonic flaw-detection system 100 may generate the defect candidate group such that the defect candidate group includes clusters determined to be likely to have a defect. Accordingly, the defect candidate group may be a set of clusters in which defects may exist.

According to the invention, the ultrasonic flaw-detection system 100 selects or determines or generates the defect candidate group based on an artificial intelligence or deep learning algorithm using the signal data preprocessed in step S20 as an input. The ultrasonic flaw-detection system 100 may use, as an artificial intelligence algorithm, a variational auto encoder (VAE) or a residual neural network (ResNet) that is a multilayer neural network classification algorithm. The deep learning algorithm that the ultrasonic flaw-detection system 100 can use is not limited thereto, and it is also possible for the ultrasonic flaw-detection system 100 to use other deep learning algorithms.

The deep learning algorithm utilized by the ultrasonic flaw-detection system 100 to obtain the defect candidate group can be optimized through prior learning before its actual application. Here, learning can be performed by using the signal data selected as having defects by experts.

As a result of step S30, the ultrasonic flaw-detection system 100 obtains the defect candidate group determined to likely or potentially have defects. Here, the defect candidate group may be a set of clusters expected to include or likely to have a defect.

In step S40, the ultrasonic flaw-detection system 100 generates image data based on the defect candidate group obtained in step S30. The image data may be data for an image that has been conventionally referred to as B-Scan and/or C-Scan used in the ultrasonic flaw-detection. A method for generating such image data may adopt a method for generating conventional B-Scan and/or C-Scan. According to the embodiment, it is not necessary to generate the image data for the entire detection target, and it may be sufficient to generate the image data only for portions related to the signal data selected as having defects in step S30. In other words, it may be sufficient to generate image data only for portions corresponding to the defect candidate group received from the defect candidate group selection unit 30.

In step S50, the ultrasonic flaw-detection system 100 determines a defect based on the generated image data. According to the invention, the ultrasonic flaw-detection system 100 finally determines the defect based on an artificial intelligence or deep learning algorithm using the image data generated in step S40 as an input.

According to the embodiment, the ultrasonic flaw-detection system 100 may use, as a deep learning algorithm, a you only look once (YOLO) algorithm or a Faster R-CNN algorithm which is effective in distinguishing objects within an image.

The ultrasonic flaw-detection system 100 may provide information indicating the object obtained as a result of step S50. The ultrasonic flaw-detection system 100 may determine whether the class of the object is a defect class or background noise class. The ultrasonic flaw-detection system 100 may provide a bounding box. If the class of the object is determined to be a defect, the bounding box may mean a rectangular box surrounding the object. The bounding box may be in any geometry shape, such as a circle, oval, rhombus, which can encircle or identify the object, identified as a defect.

Although the present invention has been described with reference to the embodiment shown in the drawings, this is just an example, and it will be understood by those skilled in the art that various modifications and equivalent thereto may be made. Therefore, the true technical scope of the present invention should be determined by the appended claims. Also, it is noted that any one feature of an embodiment of the present invention described in the specification may be applied to another embodiment of the present invention.

### Advantageous Effects

According to the embodiments of the present invention, the ultrasonic flaw-detection is performed by using a trained artificial intelligence, so that the objectivity of a detection result can be obtained and human errors can be prevented.

According to the embodiments of the present invention, through an ensemble model to which a signal model and an image model are applied together, defect extraction performance can be improved during automatic evaluation and the reliability of defect analysis results can be enhanced.

Advantageous effects that can be obtained from the present invention are not limited to the above-mentioned effects. Further, other unmentioned effects can be clearly understood from the following descriptions by those skilled in the art to which the present invention belongs.

### REFERENCE NUMERALS

100: Ultrasonic Flaw-detection System
10: Ultrasonic Flaw-detection Device
20: Signal Data Preprocessor
30: Defect Candidate Group Selection Unit
40: Image Data Generator
50: Defect Determination Unit

## Claims

1. An ultrasonic flaw-detection system (100) comprising:
an ultrasonic flaw-detection device (10) configured to transmit an ultrasonic wave to a detection target (200), collect an ultrasonic echo wave reflected from the detection target (200), and then generate a signal data;
a signal data preprocessor (20) configured to preprocess the signal data by removing noise from the signal data to obtain noise-processed signal data, extracting poles from the signal data, and dividing the signal data into a plurality of clusters having a certain size based on the pole, a pole being a peak in the noise-processed signal data representing a discontinuous portion of the detection target (200), wherein clustering is performed such that a start point and an end point of a cluster are determined based on a discontinuous portion;
a defect candidate group selection unit (30) configured to select a defect candidate group based on the preprocessed signal data and generate defect candidate signal data based on the selection, wherein the defect candidate group selection unit (30) is configured to determine whether a defect is included in the signal data belonging to each cluster based on a deep learning algorithm that uses each of the plurality of clusters as an input, and select the cluster determined to include a defect as the defect candidate group, wherein the defect candidate group indicates signal data or a location within the detection target (200), which is likely to have a defect;
an image data generator (40) configured to generate image data based on the defect candidate signal data included in the defect candidate group; and
a defect determination unit (50) configured to determine whether there is a defect in the defect candidate group based on a deep learning algorithm using the image data as an input.

2. The ultrasonic flaw-detection system (100) of claim 1, wherein the image data generator (40) is configured to generate a B-Scan image data and a C-Scan image data on the detection target (200), based on the signal data.

3. The ultrasonic flaw-detection system (100) of claim 2, wherein the image data generator (40) is configured to generate the B-Scan image data and the C-Scan image data on an area in which the defect candidate group is included in the detection target (200), based on the signal data included in the defect candidate group.

4. The ultrasonic flaw-detection system (100) of claim 1, wherein the deep learning algorithm is a you only look once, YOLO, algorithm or a Faster R-CNN algorithm.

5. The ultrasonic flaw-detection system (100) of claim 1, wherein the defect determination unit (50) is configured to output whether there is a defect for each of the defect candidate groups and output, when there is a defect, a bounding box that surrounds the corresponding defect.

6. An ultrasonic flaw-detection method, comprising:
transmitting an ultrasonic wave to a detection target (200), collecting an ultrasonic echo wave reflected from the detection target (200), and then generating (S10) a signal data;
preprocessing (S20) the signal data by removing noise from the signal data to obtain noise-processed signal data, extracting poles from the signal data, and dividing the signal data into a plurality of clusters having a certain size based on the pole, a pole being a peak in the noise-processed signal data representing a discontinuous portion of the detection target (200), wherein clustering is performed such that a start point and an end point of a cluster are determined based on a discontinuous portion;
selecting (S30) a defect candidate group based on the preprocessed signal data and generate defect candidate signal data based on the selection, wherein selecting the defect candidate group comprises determining whether a defect is included in the signal data belonging to each cluster based on a deep learning algorithm that uses each of the plurality of clusters as an input, and select the cluster determined to include a defect as the defect candidate group, the defect candidate group indicating signal data or a location within the detection target (200), which is likely to have a defect;
generating (S40) image data based on the defect candidate signal data included in the defect candidate group; and
determining (S50) whether there is a defect in the defect candidate group based on a deep learning algorithm using the image data as an input.

7. The ultrasonic flaw-detection method of claim 6, wherein generating (S40) the image data comprises generating a B-Scan image data and a C-Scan image data on the detection target (200), based on the signal data.

8. The ultrasonic flaw-detection method of claim 7, wherein generating (S40) the image data comprises generating the B-Scan image data and the C-Scan image data on an area in which the defect candidate group is included in the detection target (200), based on the signal data included in the defect candidate group.

9. The ultrasonic flaw-detection method of claim 6, wherein determining (S50) whether there is a defect in the defect candidate group based on the image data comprises outputting whether there is a defect in each of the defect candidate groups and outputting, when there is a defect, a bounding box that surrounds the corresponding defect.

## Patentansprüche

1. Ultraschall-Fehlererkennungssystem (100), umfassend:
eine Ultraschall-Fehlererkennungsvorrichtung (10), die so konfiguriert ist, dass sie eine Ultraschallwelle an ein Erkennungsziel (200) überträgt, eine von dem Erkennungsziel (200) reflektierte Ultraschallechowelle erfasst und anschließend Signaldaten erzeugt;
einen Signaldatenvorverarbeitungsprozessor (20), der so konfiguriert ist, dass er die Signaldaten vorverarbeitet, indem er Rauschen aus den Signaldaten entfernt, um rauschverarbeitete Signaldaten zu erhalten, Pole aus den Signaldaten extrahiert und die Signaldaten basierend auf dem Pol in eine Mehrzahl von Clustern mit einer bestimmten Größe unterteilt, wobei ein Pol ein Peak in den rauschverarbeiteten Signaldaten ist, der einen diskontinuierlichen Abschnitt des Erkennungsziels (200) repräsentiert, wobei die Clusterbildung so durchgeführt wird, dass ein Startpunkt und ein Endpunkt eines Clusters basierend auf einem diskontinuierlichen Abschnitt bestimmt werden;
eine Defektkandidatengruppen-Auswahleinheit (30), die so konfiguriert ist, dass sie eine Defektkandidatengruppe basierend auf den vorverarbeiteten Signaldaten auswählt und basierend auf der Auswahl Defektkandidatensignaldaten erzeugt, wobei die Defektkandidatengruppen-Auswahleinheit (30) so konfiguriert ist, dass sie basierend auf einem Deep-Learning-Algorithmus, der jeden der Mehrzahl von Clustern als Eingabe verwendet, bestimmt, ob ein Defekt in den Signaldaten, die zu jedem Cluster gehören, enthalten ist, und den Cluster, bei dem festgestellt wird, dass er einen Defekt enthält, als Defektkandidatengruppe auswählt, wobei die Defektkandidatengruppe Signaldaten oder eine Stelle innerhalb des Erkennungsziels (200) angibt, die wahrscheinlich einen Defekt aufweist; einen Bilddatengenerator (40), der so konfiguriert ist, dass er Bilddaten basierend auf den in der Defektkandidatengruppe enthaltenen Defektkandidatensignaldaten erzeugt; und
eine Defektbestimmungseinheit (50), die so konfiguriert ist, dass sie basierend auf einem Deep-Learning-Algorithmus, der die Bilddaten als Eingabe verwendet, bestimmt, ob in der Defektkandidatengruppe ein Defekt vorliegt.

2. Ultraschall-Fehlererkennungssystem (100) nach Anspruch 1, wobei der Bilddatengenerator (40) so konfiguriert ist, dass er basierend auf den Signaldaten B-Scan-Bilddaten und C-Scan-Bilddaten in Bezug auf das Erkennungsziel (200) erzeugt.

3. Ultraschall-Fehlererkennungssystem (100) nach Anspruch 2, wobei der Bilddatengenerator (40) so konfiguriert ist, dass er die B-Scan-Bilddaten und die C-Scan-Bilddaten in Bezug auf einen Bereich des Erkennungsziels (200), in dem die Defektkandidatengruppe enthalten ist, basierend auf den in der Defektkandidatengruppe enthaltenen Signaldaten erzeugt.

4. Ultraschall-Fehlererkennungssystem (100) nach Anspruch 1, wobei der Deep-Learning-Algorithmus ein You-Only-Look-Once, YOLO, Algorithmus oder ein Faster-R-CNN-Algorithmus ist.

5. Ultraschall-Fehlererkennungssystem (100) nach Anspruch 1, wobei die Defektbestimmungseinheit (50) so konfiguriert ist, dass sie für jede der Defektkandidatengruppen ausgibt, ob ein Defekt vorliegt, und bei Vorliegen eines Defekts eine Begrenzungsbox ausgibt, die den korrespondierenden Defekt umgibt.

6. Ultraschall-Fehlererkennungsverfahren, umfassend:
Übertragen einer Ultraschallwelle an ein Erkennungsziel (200), Erfassen einer von dem Erkennungsziel (200) reflektierten Ultraschallechowelle und anschließendes Erzeugen (S10) von Signaldaten,
Vorverarbeiten (S20) der Signaldaten durch Entfernen von Rauschen aus den Signaldaten, um rauschverarbeitete Signaldaten zu erhalten, Extrahieren von Polen aus den Signaldaten und Aufteilen der Signaldaten in eine Mehrzahl von Clustern mit einer bestimmten Größe basierend auf dem Pol, wobei ein Pol ein Peak in den rauschverarbeiteten Signaldaten ist, der einen diskontinuierlichen Abschnitt des Erkennungsziels (200) repräsentiert, wobei die Clusterbildung so durchgeführt wird, dass ein Startpunkt und ein Endpunkt eines Clusters basierend auf einem diskontinuierlichen Abschnitt bestimmt werden;
Auswählen (S30) einer Defektkandidatengruppe basierend auf den vorverarbeiteten Signaldaten und Erzeugen von Defektkandidatensignaldaten basierend auf der Auswahl, wobei das Auswählen der Defektkandidatengruppe das Bestimmen, ob ein Defekt in den Signaldaten enthalten ist, die zu jedem Cluster gehören, basierend auf einem Deep-Learning-Algorithmus, der jeden von der Mehrzahl von Clustern als Eingabe verwendet, und das Auswählen des Clusters, bei dem festgestellt wird, dass er einen Defekt enthält, als Defektkandidatengruppe, wobei die Defektkandidatengruppe Signaldaten oder eine Stelle innerhalb des Erkennungsziels (200) angibt, die wahrscheinlich einen Defekt aufweist, umfasst;
Erzeugen (S40) von Bilddaten basierend auf den in der Defektkandidatengruppe enthaltenen Defektkandidatensignaldaten; und Bestimmen (S50), ob ein Defekt in der Defektkandidatengruppe vorliegt, basierend auf einem Deep-Learning-Algorithmus, der die Bilddaten als Eingabe verwendet.

7. Ultraschall-Fehlererkennungsverfahren nach Anspruch 6, wobei das Erzeugen (S40) der Bilddaten das Erzeugen von B-Scan-Bilddaten und C-Scan-Bilddaten in Bezug auf das Erkennungsziel (200) basierend auf den Signaldaten umfasst.

8. Ultraschall-Fehlererkennungsverfahren nach Anspruch 7, wobei das Erzeugen (S40) der Bilddaten das Erzeugen der B-Scan-Bilddaten und der C-Scan-Bilddaten in Bezug auf einen Bereich, in dem die Defektkandidatengruppe in dem Erkennungsziel (200) enthalten ist, basierend auf den in der Defektkandidatengruppe enthaltenen Signaldaten umfasst.

9. Ultraschall-Fehlererkennungsverfahren nach Anspruch 6, wobei das Bestimmen (S50), ob in der Defektkandidatengruppe ein Defekt vorliegt, basierend auf den Bilddaten das Ausgeben, ob in jeder der Defektkandidatengruppen ein Defekt vorliegt, und im Falle des Vorliegens eines Defekts das Ausgeben einer Begrenzungsbox, die den entsprechenden Defekt umgibt, umfasst.

## Revendications

1. Système de détection de défauts par ultrasons (100), comprenant :
un dispositif de détection de défaut par ultrasons (10) configuré pour transmettre une onde ultrasonore à une cible de détection (200), recueillir une onde d'écho ultrasonore réfléchie par la cible de détection (200), puis générer des données de signaux ;
un préprocesseur de données de signaux (20) configuré pour prétraiter les données de signaux en éliminant le bruit des données de signaux afin d'obtenir des données de signaux traitées, en extrayant les pôles des données de signaux et en divisant les données de signaux en une pluralité de grappes de taille définie sur la base du pôle, un pôle étant une crête dans les données de signaux traitées représentant une partie discontinue de la cible de détection (200), le regroupement en grappes étant exécuté de sorte qu'un point initial et un point final d'une grappe sont déterminés sur la base d'une partie discontinue ;
une unité de sélection de groupe candidat à défaut (30) configurée pour sélectionner un groupe candidat à défaut sur la base des données de signaux prétraitées et générer des données de signaux candidats à défaut sur la base de la sélection, l'unité de sélection de groupe candidat à défaut (30) étant configurée pour déterminer si un défaut est compris dans les données de signaux appartenant à chaque groupe sur la base d'un algorithme d'apprentissage profond utilisant chaque groupe de la pluralité de groupes comme entrée, et sélectionner le groupe déterminé de manière à comprendre un défaut en tant que groupe candidat à défaut, le groupe candidat à défaut indiquant des données de signaux ou un emplacement à l'intérieur de la cible de détection (200), susceptible de présenter un défaut ; un générateur de données d'image (40) configuré pour générer des données d'image sur la base des données de signaux candidats à défaut comprises dans le groupe candidat à défaut ; et
une unité de détermination de défaut (50) configurée pour déterminer si un défaut est présenté dans le groupe candidat à défaut sur la base d'un algorithme d'apprentissage profond utilisant les données d'image comme entrée.

2. Système de détection de défauts par ultrasons (100) selon la revendication 1, où le générateur de données d'image (40) est configuré pour générer des données d'image de scan B et des données d'image de scan C sur la cible de détection (200), sur la base des données de signaux.

3. Système de détection de défauts par ultrasons (100) selon la revendication 2, où le générateur de données d'image (40) est configuré pour générer les données d'image de scan B et les données d'image de scan C sur une zone où le groupe candidat à défaut est compris dans la cible de détection (200), sur la base des données de signaux comprises dans le groupe candidat à défaut.

4. Système de détection de défauts par ultrasons (100) selon la revendication 1, où l'algorithme d'apprentissage profond est un algorithme You Only Look Once, YOLO, ou un algorithme R-CNN plus rapide.

5. Système de détection de défauts par ultrasons (100) selon la revendication 1, où l'unité de détermination de défaut (50) est configurée pour indiquer si un défaut est présenté pour chacun des groupes de défauts candidats et générer, en cas de défaut, une boîte englobante entourant le défaut correspondant.

6. Procédé de détection de défauts par ultrasons, comprenant :
la transmission d'une onde ultrasonore à une cible de détection (200), le recueil d'une onde d'écho ultrasonore réfléchie par la cible de détection (200), puis la génération (S10) de données de signaux ;
le prétraitement (S20) des données de signaux en éliminant le bruit des données de signaux afin d'obtenir des données de signaux traitées, en extrayant les pôles des données de signaux et en divisant les données de signaux en une pluralité de grappes de taille définie sur la base du pôle, un pôle étant une crête dans les données de signaux traitées représentant une partie discontinue de la cible de détection (200), le regroupement en grappes étant exécuté de sorte qu'un point initial et un point final d'une grappe sont déterminés sur la base d'une partie discontinue ;
la sélection (S30) d'un groupe candidat à défaut sur la base des données de signaux prétraitées et la génération des données de signaux candidats à défaut sur la base de la sélection, la sélection de groupe candidat à défaut comprenant la détermination si un défaut est compris dans les données de signaux appartenant à chaque groupe sur la base d'un algorithme d'apprentissage profond utilisant chaque groupe de la pluralité de groupes comme entrée, et la sélection du groupe déterminé de manière à comprendre un défaut en tant que groupe candidat à défaut, le groupe candidat à défaut indiquant des données de signaux ou un emplacement à l'intérieur de la cible de détection (200), susceptible de présenter un défaut ;
la génération (S40) de données d'image sur la base des données de signaux candidats à défaut comprises dans le groupe candidat à défaut ; et
la détermination (S50) si un défaut est présenté dans le groupe candidat à défaut sur la base d'un algorithme d'apprentissage profond utilisant les données d'image comme entrée.

7. Procédé de détection de défauts par ultrasons selon la revendication 6, où la génération (S40) des données d'image comprend la génération de données d'image de scan B et de données d'image de scan C sur la cible de détection (200), sur la base des données de signaux.

8. Procédé de détection de défauts par ultrasons selon la revendication 7, où la génération (S40) des données d'image comprend la génération des données d'image de scan B et des données d'image de scan C sur une zone où le groupe candidat à défaut est compris dans la cible de détection (200), sur la base des données de signaux comprises dans le groupe candidat à défaut.

9. Procédé de détection de défauts par ultrasons selon la revendication 6, où la détermination (S50) si un défaut est présenté dans le groupe candidat à défaut sur la base des données d'image comprend la transmission si un défaut est présenté dans chacun des groupes candidats à défaut et la génération, dans le cas où un défaut est présenté, d'une boîte englobante entourant le défaut correspondant.
